# FASCICULE DE BREVET EUROPEEN

(11) **EP 2 884 327 B1**
(45) Date de publication et mention de la délivrance du brevet: **12.10.2016**
(21) Numéro de dépôt: 14195310.9
(22) Date de dépôt: 28.11.2014
(51) Int. Cl.: G02B 26/10, G01C 21/02, G01S 3/786, G02B 27/64, G02B 17/06

(54) **Système optique d'observation spatiale à balayage**
Optisches System zur räumlichen Beobachtung durch Abtastung
Scanning optical system for space observation

(30) Priorité: 13.12.2013 FR 1362608
(43) Date de publication de la demande: 17.06.2015
(73) Titulaire: Airbus Defence and Space SAS, 78130 Les Mureaux (FR)
(72) Inventeur: Pasternak, Frédérick, 31590 Gauré (FR)
(74) Mandataire: Ipside

(56) Documents cités:
- EP-A1- 0 170 317
- WO-A1-98/02769
- US-A- 3 449 035
- US-A- 5 018 844
- US-A- 5 923 359

## Description

### Domaine de l'invention

La présente invention appartient au domaine des systèmes optiques pour l'observation spatiale. Plus particulièrement, la présente invention concerne les systèmes optiques à balayage pour les satellites défilants.

### Etat de la technique

Un système optique pour l'observation spatiale est un système optique embarqué sur un satellite et permettant de collecter des informations sur la Terre; les étoiles, les planètes,..., via l'enregistrement d'images haute résolution. Un tel système optique comporte entre autres un télescope, par exemple de type Cassegrain, Korsch, Newton...

Certains systèmes optiques, notamment pour les satellites défilants, nécessitent en outre un système à balayage afin de réaliser une image dans une ou plusieurs bandes spectrales.

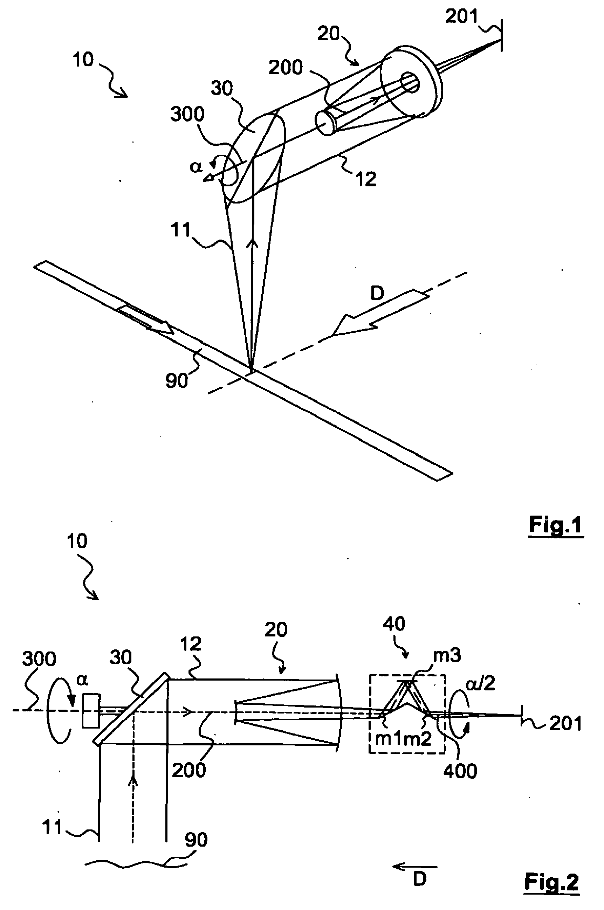

La figure 1 représente un exemple d'un système optique 10, à balayage, embarqué sur un satellite défilant, tel que le système optique « Advanced Very High Resolution Radiometer » (plus connu sous l'acronyme AVHRR) embarqué sur les satellites Met-Op (Meteorological Operational). Le système optique 10 comporte un télescope 20, de type Cassegrain, ayant un axe optique 200 parallèle au vecteur vitesse *̅v̅*̅ du satellite, c'est-à-dire parallèle à une direction D de défilement du satellite. Le système optique 10 comporte en outre un miroir de balayage 30, rotatif selon un axe de rotation 300 confondu avec l'axe optique 200 du télescope 20. Le miroir de balayage 30 est agencé pour recevoir un faisceau incident de rayons 11, provenant d'une portion de scène observée 90, et renvoyer un faisceau réfléchi de rayons 12 selon l'axe optique 200 dudit télescope. En sortie du télescope, le faisceau de rayons est focalisé dans un plan focal 201 du télescope 20. L'image de la portion de scène 90 est observée dans le plan focal 201 du télescope 20 par un détecteur (non représenté), par exemple de type caméra à transferts de charge, dite caméra CCD (« Charge Coupled Device »).

Le miroir de balayage 30 est incliné par rapport à l'axe optique 200 du télescope. Dans l'exemple de la figure 1, ledit miroir de balayage présente une normale orientée à 45° par rapport à l'axe optique 200 du télescope. L'angle formé, au niveau du miroir de balayage 30, entre le faisceau incident de rayons 11 et le faisceau réfléchi de rayons 12 est de 90°.

Le miroir de balayage 30 est commandé par un moteur (non représenté), par exemple à mouvement alternatif ou continu. Une telle configuration permet ainsi un balayage ligne perpendiculairement à la direction D de défilement du satellite.

L'inconvénient d'un tel système optique à balayage réside dans le fait que la rotation du miroir de balayage 30, d'un angle α autour de l'axe optique 200 du télescope, entraîne une rotation de l'image obtenue dans le plan focal 201 du télescope 20, d'un angle égal à l'angle α de rotation du miroir de balayage. Ainsi, la juxtaposition de deux lignes de balayage successives ne permet d'obtenir une couverture régulière que pour un angle α proche de zéro.

Des solutions existent pour compenser une telle rotation de l'image dans le plan focal.

Une solution connue consiste à prévoir un jeu de prismes ou miroirs, faisant intervenir au moins trois surfaces réfléchissantes, et intercalé entre le télescope 20 et son plan focal 201. Un exemple est illustré à la figure 2. La figure 2 se distingue de la figure 1 par l'interposition sur l'axe optique 200 du télescope 20, en aval dudit télescope et en amont du plan focal 201, c'est-à-dire entre le télescope et le plan focal, d'un dispositif optique de rotation d'image 40. Ledit dispositif optique de rotation d'image comporte deux miroirs inclinés m1 et m2, positionnés sur l'axe optique 200 du télescope, faisant transversalement face à un miroir m3 parallèle audit axe optique 200 du télescope 20. La disposition des trois miroirs m1, m2, m3 est une disposition dite en K couché. Un tel dispositif optique de rotation d'image est généralement dénommé dérotateur. Le passage d'un faisceau optique issu du télescope 20 au travers de ce dispositif optique de rotation d'image génère une symétrie de l'image par rapport à un plan parallèle au miroir m1.

Le dispositif optique de rotation d'image 40 est rotatif, avec un axe de rotation 400 confondu avec l'axe optique 200 du télescope. Le dispositif optique de rotation d'image 40 est commandé par un moteur (non représenté), à mouvement alternatif ou continu. Une rotation dudit dispositif optique de rotation d'image d'un angle de α par rapport à l'axe optique 200, crée une rotation de l'image dans le plan focal 201 d'un angle 2α.

Ainsi, pour compenser la rotation de l'image dans le plan focal, lorsque le miroir de balayage 30 effectue une rotation d'un angle α autour de l'axe optique, le dispositif optique de rotation d'image 40 doit effectuer une rotation d'un angle de α/2 autour de l'axe optique, de même sens que la rotation du miroir de balayage.

En résumé, pour effectuer un balayage ligne, le dispositif optique de rotation d'image 40 est actionné par un moteur tournant à une vitesse moitié de celle du moteur 50 du miroir de balayage 30, afin de générer une rotation d'image opposée à celle générée par le miroir de balayage 30.

D'autres exemples, permettant de compenser la rotation du miroir de balayage 30, plus complexes que la disposition en K couché, font intervenir un dispositif optique de rotation d'image comportant un plus grand nombre de surfaces réfléchissantes. On peut citer par exemple le brevet US 4 929 040 qui décrit un dispositif optique de rotation d'image comportant cinq miroirs.

Cependant, ces systèmes optiques comportant un dispositif optique de rotation d'image, quelques soit le nombre de miroirs, présentent un encombrement et un coût non négligeable.

### Exposé de l'invention

La présente invention a pour objet de pallier ces inconvénients et propose un système optique comportant :
- un miroir de balayage, rotatif, agencé de sorte à recevoir un faisceau incident de rayons et renvoyer un faisceau de rayons, dit faisceau d'entrée, selon un axe donné, dit premier axe,
- un instrument optique agencé de sorte à recevoir le faisceau d'entrée provenant du miroir de balayage, et à renvoyer un faisceau de rayons, dit faisceau de sortie, selon un axe donné, dit deuxième axe,
- un dispositif optique de rotation d'image, disposé sur le deuxième axe et agencé de sorte à recevoir le faisceau de sortie.

Selon l'invention, l'instrument optique est agencé de sorte à renvoyer le faisceau de sortie parallèlement au faisceau d'entrée, dans une direction de propagation opposée audit faisceau d'entrée, en direction du dispositif optique de rotation d'image. Le miroir de balayage est agencé de sorte à présenter un axe de rotation aligné et confondu avec le premier axe. Le dispositif optique de rotation d'image est agencé de sorte à présenter un axe de rotation aligné et confondu avec le deuxième axe. Le système optique comporte en outre un moyen d'entraînement en rotation commun au miroir de balayage et au dispositif optique de rotation d'image autour de leur axe de rotation respectif.

Un tel système optique permet avantageusement l'observation d'une portion de scène visée. Une image de la portion de scène visée est observée dans un plan image de l'instrument optique par un détecteur.

Le miroir de balayage est orienté de sorte que les rayons du faisceau incident forment, juste après réflexion sur ledit miroir de balayage, un faisceau de rayons qui a une première direction de propagation.

Dans le cadre de la présente invention, on entend par direction de propagation d'un faisceau de rayons la direction de propagation moyenne de ses rayons. Le faisceau de rayons peut avoir une ouverture angulaire, notamment lorsqu'il s'agit d'un faisceau divergent ou convergent. Dans ce cas, sa direction de propagation est la direction d'un axe longitudinal central du faisceau.

Ainsi, par premier axe, on entend un axe longitudinal central du faisceau d'entrée. Et par second axe, on entend un axe longitudinal central du faisceau de sortie.

Selon l'invention, les premier et deuxième axes sont parallèles et non confondus ; le faisceau de sortie ressort de l'instrument optique parallèle et non confondu avec le faisceau d'entrée.

Le dispositif optique de rotation d'image est configuré pour compenser une rotation, dans le plan focal, de l'image de la portion de scène visée due à la rotation du miroir de balayage.

Selon une disposition particulièrement avantageuse, le dispositif optique de rotation d'image comporte un jeu de N miroirs, N étant impair et égal ou supérieur à trois.

De préférence, le miroir de balayage est configuré pour effectuer une rotation d'un angle prédéfini autour du premier axe pour réaliser un balayage d'une portion de scène visée et le dispositif optique de rotation d'image est configuré pour effectuer quant à lui une rotation, autour du deuxième axe, d'un angle moitié de l'angle de rotation du miroir de balayage.

Contrairement aux systèmes optiques existants où le miroir de balayage et le dispositif optique de rotation d'image sont positionnés de part et d'autre de l'instrument optique, le système optique de l'invention présente un dispositif optique de rotation d'image positionné à proximité du miroir de balayage.

Grace à la configuration de l'instrument optique et au positionnement relatif du dispositif de rotation d'image par rapport au miroir de balayage, les dimensions globales du système optique sont réduites. Le système optique s'étend à présent sur une faible longueur, sensiblement équivalente à une distance focale de l'instrument optique. Par conséquent, le système optique de l'invention est particulièrement compact.

De plus, le système optique de l'invention ne possède qu'un seul moyen d'entrainement en rotation, commun au miroir de balayage et au dispositif optique de rotation d'image. Cette limitation du nombre de moyen d'entrainement contribue à réduire l'encombrement ainsi que la masse de l'ensemble du système optique.

Un tel système optique peut être facilement utilisé à bord d'un satellite défilant, par exemple planétaire ou terrestre, pour l'observation spatiale par balayage. Le système optique peut alors être positionné sur le satellite de telle sorte que le plan image de l'instrument optique, dans lequel se trouve le détecteur d'image, soit perpendiculaire à une direction de défilement du satellite. De plus, de part sa compacité, le système optique de l'invention est particulièrement adapté pour être installé dans un volume de logement restreint à bord du satellite.

Suivant des modes de réalisation préférés, l'invention répond en outre aux caractéristiques suivantes, mises en oeuvre séparément ou en chacune de leurs combinaisons techniquement opérantes.

Selon une disposition particulièrement avantageuse, l'instrument optique est un télescope comportant au moins trois miroirs de renvoi.

Dans une forme préférée de réalisation, par souci de compacité et de facilité de réalisation du système optique, le télescope comporte trois miroirs de renvoi.

Les miroirs de renvoi sont situés successivement sur un chemin des rayons entre le miroir de balayage et le dispositif optique de rotation d'image, avec un premier miroir de renvoi positionné sur lé premier axe pour recevoir le faisceau d'entrée et un dernier miroir de renvoi positionné sur le deuxième axe pour focaliser le faisceau de sortie le long dudit deuxième axe.

Selon une caractéristique avantageuse, le système optique comporte un moyen de couplage en rotation du miroir de balayage et du dispositif optique de rotation d'image, associé au moyen d'entraînement en rotation commun. Le miroir de balayage et le dispositif optique de rotation d'image sont couplés entre eux de sorte que l'un entraîne l'autre en rotation. De cette façon, une vitesse angulaire de rotation du dispositif optique de rotation d'image et une vitesse angulaire de rotation du miroir sont synchronisées entre elles pour assurer une correction parfaite de la rotation d'image dans le plan image.

Selon une disposition particulièrement avantageuse, le moyen d'entraînement en rotation commun est associé au miroir de balayage. Ainsi, le dispositif optique de rotation d'image est entraîné en rotation par le moyen d'entraînement en rotation du miroir de balayage.

Selon une caractéristique avantageuse, le moyen de couplage en rotation présente un rapport de transmission entre la vitesse angulaire de rotation du miroir de balayage et la vitesse angulaire rotation du dispositif optique de rotation d'image de 2.

Selon une caractéristique avantageuse, pour réduire les couples perturbateurs induits par la rotation du miroir de balayage et celle du dispositif optique de rotation d'image, le système optique comporte un dispositif de compensation de couple couplé au moyen de couplage en rotation de l'un à l'autre.

Selon une forme particulièrement avantageuse, le moyen de couplage en rotation est un système à galets-courroie. Un galet est associé à l'axe de rotation du miroir de balayage, un galet est associé à l'axe de rotation du dispositif optique de rotation d'image et une courroie coopère avec les deux galets pour transmettre le mouvement de rotation.

Selon une autre forme particulièrement avantageuse, le moyen de couplage comporte un système à engrenages.

### Présentation des figures

La description suivante de l'invention est faite en se référant aux figures, dans lesquelles des références identiques désignent des éléments identiques ou analogues, qui représentent de manière non limitative :
- Figure 1 : déjà décrite, une vue schématique en perspective d'un système optique de l'art antérieur,
- Figure 2 : déjà décrite, une représentation schématique d'un système optique de l'art antérieur, comportant un dispositif optique de rotation d'image,
- Figure 3a : une représentation schématique d'un système optique suivant l'invention,
- Figure 3b : une vue du système optique de la figure 3a, selon une coupe CC,
- Figure 4 : une vue en perspective d'un moyen de couplage en rotation selon un mode de réalisation,
- Figure 5 : une vue d'ensemble en perspective du moyen de couplage en rotation selon le mode de réalisation de la figure 4, associé à un dispositif optique de rotation d'image,
- Figure 6 : une représentation schématique du moyen de couplage en rotation, selon le mode de réalisation de la figure 4, couplé à un dispositif de compensation de couple,
- Figure 7 : une représentation schématique d'un moyen de couplage en rotation couplé à un dispositif de compensation de couple, selon un autre mode de réalisation,
- Figure 8 : une représentation schématique de la propagation d'un faisceau de rayon au travers d'un système optique selon un mode de réalisation et comportant un dispositif optique de rotation d'image comportant un jeu de 5 miroirs,
- Figure 9 : une représentation en perspective de la propagation d'un faisceau de rayon au travers du système optique de la figure 8.

Des références identiques sur des figures différentes désignent des éléments identiques.

### Description détaillée de modes de réalisation de l'invention

La présente invention concerne un système optique 100.

La présente invention est applicable à tout système optique, en particulier aux systèmes optiques mis en oeuvre pour l'observation spatiale (observation terrestre, planétaire, stellaire...) et embarqués à bord d'engins spatiaux, tels que des satellites défilants.

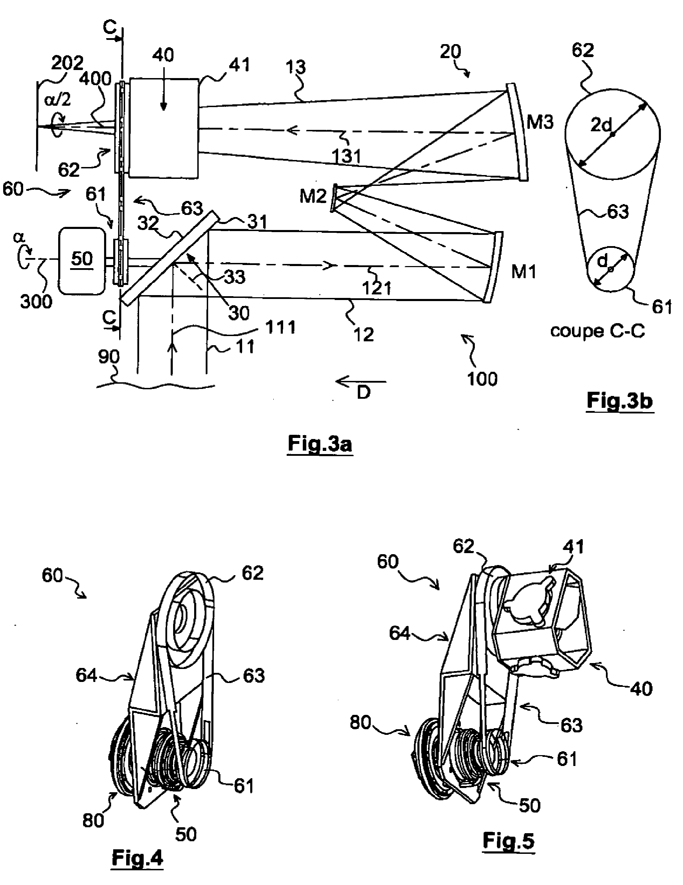

La figure 3a illustre schématiquement un système optique 100 permettant d'assurer un balayage ligne d'une portion de scène observée 90, selon un mode particulier de réalisation.

Le satellite défilant, à bord duquel est installé le système optique, défile selon un axe et une direction de défilement, illustrée par la flèche D, à une vitesse prédéfinie.

Pour des raisons de clarté, les composants du système optique, notamment les supports des miroirs, qui ne sont pas nécessaires à la compréhension de l'invention, ne sont pas représentés sur les figures 3a à 9.

Le système optique 100 comporte :
- un miroir de balayage 30,
- trois miroirs de renvoi, dits premier M1, deuxième M2 et troisième M3 miroir de renvoi, formant ensemble un instrument optique du type télescope 20, par exemple un télescope de Korsch,
- un détecteur d'image, dit détecteur (non représenté).

Un faisceau de rayons, dit faisceau incident 11, provenant de points d'une portion de scène 90 visée, est réfléchi d'abord par le miroir de balayage 30, puis successivement par chacun des trois miroirs de renvoi M1, M2, M3.

Le détecteur est positionné après le troisième miroir de renvoi pour saisir l'image finale qui est formée de la portion de scène. Préférentiellement, le détecteur présente une surface de détection agencée dans un plan image 202 du télescope 20.

Le miroir de balayage 30 est incliné par rapport à un axe longitudinal central 111 et une direction de propagation du faisceau incident 11. Le miroir de balayage 30 est agencé de sorte que le faisceau incident 11 qui provient de la portion de scène 90 est réfléchi par ledit miroir de balayage, selon un axe longitudinal central 121 et une direction de propagation donnés, différents de l'axe longitudinal central 111 et de la direction de propagation du faisceau incident 11.

Le faisceau de rayons réfléchi par le miroir de balayage 30 est dit faisceau d'entrée 12. Son axe longitudinal central 121 et sa direction de propagation sont dits premier axe 121 et première direction de propagation.

Le premier axe 121 est parallèle à l'axe de défilement du satellite et la première direction de propagation est opposée à la direction D de défilement du satellite, comme illustré sur la figure 3a.

Le miroir de balayage 30 est de préférence un miroir plan présentant une première surface, dite surface réfléchissante 31, d'axe optique 33.

Dans l'exemple non limitatif illustré sur la figure 3, le miroir de balayage 30 est orienté de sorte que l'axe longitudinal central 111 du faisceau incident 11 forme un angle de sensiblement 90° avec le premier axe 121. L'axe longitudinal central 111 du faisceau incident 11 forme un angle de sensiblement 45° avec l'axe optique 33 du miroir de balayage 30, après réflexion sur ledit miroir de balayage, et le premier axe 121 du faisceau d'entrée 12 forme un angle de sensiblement 45° avec l'axe optique 33 du miroir de balayage.

Le premier miroir de renvoi M1 est agencé sur le premier axe 121, dans la première direction de propagation, de sorte à renvoyer le faisceau d'entrée 11 en direction du deuxième miroir de renvoi M2.

Le deuxième miroir de renvoi M2 est disposé sur le trajet du faisceau de rayons renvoyé par le premier miroir de renvoi M1 et le troisième miroir de renvoi M3 est disposé sur le trajet du faisceau de rayons renvoyé par le deuxième miroir de renvoi M2.

Les deuxième M2 et troisième M3 miroirs de renvoi sont agencés par rapport au premier miroir de renvoi M1 de sorte à orienter le faisceau de rayons selon un axe longitudinal central et une direction de propagation définie.

Le troisième miroir de renvoi M3 est agencé et orienté de sorte à renvoyer un faisceau de rayons, dit faisceau de sortie 13, selon un axe longitudinal central, dit deuxième axe 131, sensiblement parallèlement au premier axe 121. Le troisième miroir de renvoi M3 est également agencé de sorte à renvoyer le faisceau de sortie 13 avec une direction de propagation, dite deuxième direction de propagation, opposée à la première direction de propagation.

En d'autres termes, les trois miroirs de renvoi M1, M2, M3 sont configurés de sorte que le premier axe 121 et le deuxième axe 131 sont parallèles entre eux et non confondus.

Bien que le télescope 20 est illustré sur la figure 3 et décrit avec trois miroirs de renvoi, le nombre de ces miroirs de renvoi n'est pas limité à celui décrit et illustré. Ainsi, il est possible, sans se départir du cadre de l'invention, de réaliser un télescope avec un nombre de miroirs de renvoi supérieur à trois, dès lors que le faisceau de sortie 13, en sortie du télescope 20, est parallèle au faisceau d'entrée 12, à l'entrée du télescope 20, avec une direction de propagation opposée.

En sortie du télescope 20, le faisceau de sortie 13 est focalisé dans le plan image 202 dudit télescope.

Le détecteur est positionné sur le deuxième axe 131. Ledit détecteur présente une surface de détection orientée perpendiculairement audit deuxième axe, et positionnée dans le plan image 202 du télescope 20,

Le détecteur est, dans un exemple préféré de réalisation, une caméra à transferts de charge, dite caméra CCD.

De préférence, comme illustré sur la figure 3a, la surface de détection du détecteur est située à proximité du miroir de balayage 30.

Selon l'invention, le miroir de balayage 30 est entraîné en rotation, à une vitesse V₃₀ prédéterminée, autour d'un axe de rotation 300 confondu avec le premier axe 121.

La rotation dudit miroir de balayage permet de réaliser un balayage ligne, perpendiculairement à l'axe de défilement du satellite, et de couvrir sur un secteur angulaire déterminé, une succession de portions de scène.

Le miroir de balayage 30 est entraîné en rotation autour du premier axe vertical par un moyen d'entrainement en rotation 50, tel que par exemple un moteur d'entraînement électrique.

Pour compenser la rotation de l'image induite par la rotation du miroir de balayage 30 autour du premier axe 121, le système optique 100 comporte en outre un dispositif optique de rotation d'image 40. Ledit dispositif optique de rotation d'image est disposé sur le deuxième axe 131, entre le troisième miroir M3 et la surface de détection du détecteur. Le dispositif optique de rotation d'image 40 est agencé de sorte à recevoir la totalité du faisceau de sortie 13.

Le dispositif optique de rotation d'image 40 comporte un jeu de N miroirs, N étant impair et supérieur ou égal à trois.

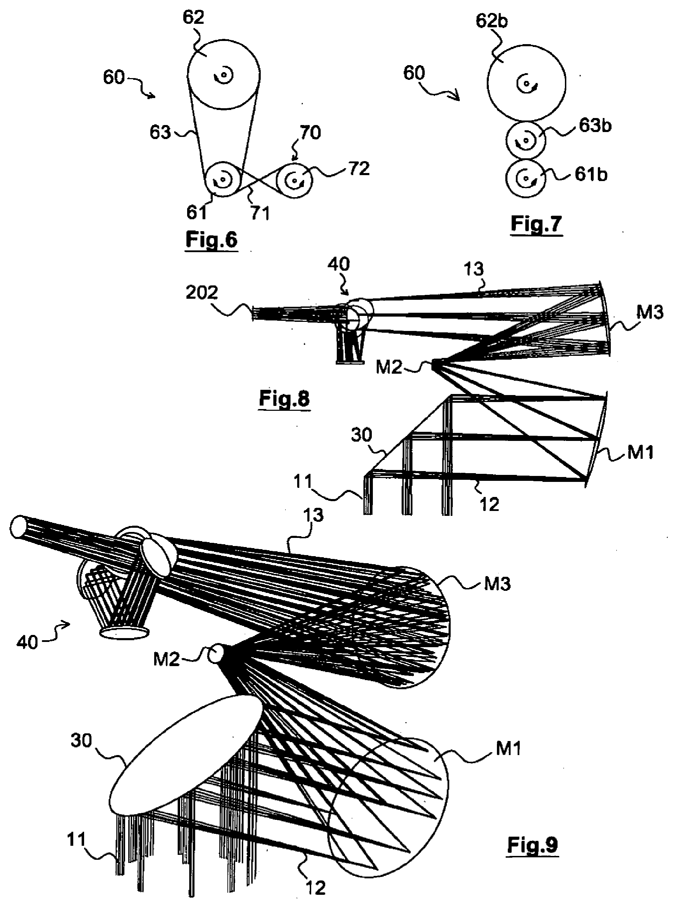

Dans des exemples préférés de réalisation, le dispositif optique de rotation d'image 40 comporte un jeu de trois miroirs ou de cinq miroirs, tels que décrits précédemment. Les figures 8 et 9 illustrent un système optique comportant un dispositif optique de rotation d'image comportant un jeu de 5 miroirs.

De préférence, le dispositif optique de rotation d'image 40 est contenu dans un bloc support, dit bloc dérotateur 41, comme illustré figure 5. Ledit bloc dérotateur est dimensionné pour positionner et maintenir les miroirs les uns par rapport aux autres.

Suivant l'invention, le dispositif optique de rotation d'image 40 est positionné à proximité du miroir de balayage 30.

Les figures 8 et 9 représentent à titre illustratif le fonctionnement d'un système optique selon un mode de réalisation de l'invention. Le télescope comporte trois miroirs de renvoi et le dispositif optique de rotation d'image comporte un jeu de cinq miroirs. Sur ces figures, plusieurs rayons ont été représentés, qui proviennent de plusieurs points d'une portion de scène située dans une direction de visée du télescope. Ces rayons illustrent le fonctionnement optique du système optique, d'une façon qui est usuelle pour l'Homme du métier.

Le dispositif optique de rotation d'image 40, est entraîné en rotation, via une rotation du bloc dérotateur 41, à une vitesse V₄₀ prédéterminée, autour d'un axe de rotation 400 confondu avec le deuxième axe 131.

Ainsi, les axes de rotation du dispositif optique de rotation d'image 40 et du miroir de balayage 30 sont parallèles et non confondus.

Avantageusement, la rotation du dispositif optique de rotation d'image 40 et du miroir de balayage 30 est réalisée à partir du même moyen d'entraînement en rotation.

Selon une disposition préférée, pour ne perturber pas la propagation du faisceau de sortie devant traverser de part en part le dispositif optique de rotation d'image 40, le moyen d'entraînement en rotation 50 est associé au miroir de balayage.

Le moyen d'entraînement en rotation 50 est préférentiellement situé sur le premier axe 121, du coté d'une surface 32 opposée à la surface réfléchissante 31 du miroir de balayage 30.

Dans une disposition avantageuse du système optique 100, le moyen d'entrainement en rotation 50, et le dispositif optique de rotation d'image 40 sont maintenus solidaires entre eux par une structure support unique 64, comme illustré sur la figure 5. Une telle disposition permet de maintenir un entraxe constant entre l'axe de rotation 400 du dispositif optique de rotation d'image 40 et l'axe de rotation 300 du miroir de balayage 30.

Le moyen d'entraînement en rotation 50 est associé à un moyen de couplage en rotation 60 du miroir de balayage 30 et du dispositif optique de rotation d'image 40.

Dans un premier mode de réalisation du moyen de couplage en rotation 60, ledit moyen de couplage en rotation comporte un système à poulies-courroie, comme illustré sur les figures 3a, 3b, 4 et 5, comportant :
- un premier galet, dit galet menant 61, de diamètre d, solidaire en rotation d'un arbre de sortie du moyen d'entraînement en rotation 50, d'axe l'axe de rotation 300 du miroir de balayage 30,
- un deuxième galet, dit galet mené 62, solidaire en rotation du bloc dérotateu 41,
- une courroie 63 coopérant avec le galet menant 61 et le galet mené 62.

Le galet mené 62 est relié par la courroie 63 au galet menant 61 pour entraîner en rotation le dispositif optique de rotation d'image 40 dans un même sens que celui du miroir de balayage 30.

Comme décrit précédemment, pour compenser la rotation de l'image dans le plan image, dû à la rotation du miroir de balayage 30, lorsque le miroir de balayage 30 effectue une rotation d'un angle α autour de son axe de rotation 300, le dispositif optique de rotation d'image 40 doit effectuer une rotation d'un angle de α/2 autour du deuxième axe, de même sens que la rotation du miroir de balayage 30.

En d'autres termes, pour effectuer un balayage ligne, le dispositif optique de rotation d'image 40 doit tourner à une vitesse V₄₀ moitié de celle du miroir de balayage, afin de générer une rotation d'image opposée à celle générée par le miroir de balayage.

Par conséquent, le diamètre des galets est défini de sorte que le rapport d'entraînement des vitesses angulaires de rotation V₃₀, V₄₀ du miroir de balayage 300 et du dispositif optique de rotation d'image 40 est d'un facteur deux, ce qui conduit à un rapport de diamètres des galets d'un facteur deux également. En d'autres termes, le diamètre du galet mené 62 est le double du diamètre d du galet menant 61.

Une telle configuration permet une synchronisation des vitesses angulaires de rotation V₃₀, V₄₀ du miroir de balayage 30 et du dispositif optique de rotation d'image 40.

Dans une forme de réalisation du moyen de couplage de rotation 60, pour éviter le glissement de la courroie 63 sur les galets menant 61 et mené 62 et ainsi assurer une correction parfaite de rotation d'image, la courroie 63 est fixée mécaniquement à au moins un des deux galets. Dans l'exemple non limitatif illustré sur les figures 4 et 5, la courroie 63 est fixée au galet menant 61. Une telle forme de réalisation présente cependant l'inconvénient d'une plage de rotation angulaire limitée, ce qui impose un mouvement de va-et-vient au miroir de balayage 30 et dispositif optique de rotation d'image 40.

Dans un exemple amélioré de réalisation, associé à ce premier mode de réalisation du moyen de couplage en rotation 60, afin de compenser les couples perturbateurs induits par la rotation du miroir de balayage 30 et du dispositif optique de rotation d'image 40, le système optique 100 comporte un dispositif de compensation de couple 70, comme illustré sur la figure 6.

Le dispositif de compensation de couple 70 comporte une courroie 71 coopérant avec soit le galet menant 61, soit le galet mené 62, et un troisième galet 72. Le troisième galet 72 est solidaire en rotation d'un arbre d'une partie mobile (non représentée) en rotation, d'axe parallèle et non confondu avec les premier et deuxième axes. La partie mobile en rotation est solidaire de la structure support unique 64.

Dans l'exemple de la figure 6, la courroie 71 coopère avec le galet menant 61.

Le troisième galet 72 est relié par la courroie 71 au galet menant 61 ou au galet mené 62 et est entraîné en rotation dans un sens opposé à celui du miroir de balayage 30 ou du dispositif optique de rotation d'image 40.

Le troisième galet 72 est configuré de sorte à fournir une inertie de rotation équivalente à la somme des inerties de rotation du miroir de balayage 30, du dispositif optique de rotation d'image 40 et du moyen d'entraînement en rotation 50. Ainsi, le couple de compensation crée par le dispositif de compensation compense l'effet des couples perturbateurs induit à la fois par la rotation du miroir de balayage 30, celle du dispositif optique de rotation d'image 40 et celle du moyen d'entraînement en rotation 50.

Le calcul de l'inertie de rotation du troisième galet 72 est à la portée de l'homme du métier. Le troisième galet 72 est dimensionné (masse, diamètre, vitesse de rotation,...) en fonction de l'inertie souhaitée.

Dans un deuxième mode de réalisation du moyen de couplage en rotation 60, ledit moyen de couplage comporte un système à engrenages, comme illustré sur la figure 7.

Le système à engrenages comporte :
- une première roue dentée, dite roue menante 61 b, solidaire en rotation de l'arbre de sortie du moyen d'entraînement en rotation 50, d'axe l'axe de rotation 300 du miroir de balayage 30,
- une deuxième roue dentée, dite roue menée 62b, solidaire en rotation du bloc dérotateur 41,
- une troisième roue dentée, dite roue intermédiaire 63b, coopérant avec les roues menante 61 b et menée 62b, par l'action de dents successivement en contact.

Comme décrit précédemment, au vu du positionnement relatif du dispositif optique de rotation d'image 40 par rapport au miroir de balayage, ledit dispositif optique de rotation d'image doit effectuer une rotation autour du deuxième axe 131, de même sens que la rotation du miroir de balayage 30 autour du premier axe 121. Ainsi, pour entraîner en rotation le dispositif optique de rotation d'image 40 dans un même sens que celui du miroir de balayage 30, la roue intermédiaire 63b effectue une rotation selon un sens de rotation opposé à la rotation des roues menante et menée 61b, 62b.

De même, pour compenser la rotation de l'image dans le plan image, dû à la rotation du miroir de balayage 30, un diamètre de la roue menée 62b est le double d'un diamètre de la roue menante 61b.

Les diamètres de la roue menante 61b et de la roue menée 62b sont définis de sorte que le rapport d'entraînement des vitesses angulaires de rotation V₃₀, V₄₀ du miroir de balayage 300 et du dispositif optique de rotation d'image 40 est d'un facteur deux.

Avantageusement, en associant une inertie de rotation à la roue intermédiaire 63b équivalente à la somme des inerties de rotation du miroir de balayage 30 et du dispositif optique de rotation d'image 50, la roue intermédiaire 63b fait office de dispositif de compensation de couple.

La roue intermédiaire 63b est configurée de sorte à fournir une inertie de rotation équivalente à la somme des inerties de rotation du miroir de balayage 30, du dispositif optique de rotation d'image 40 et du moyen d'entraînement en rotation 50.

Le calcul de l'inertie de rotation de la roue intermédiaire est à la portée de l'homme du métier. La roue intermédiaire est dimensionnée (masse, diamètre, vitesse de rotation,...) en fonction de l'inertie souhaitée.

Un tel système à engrenages offre un encombrement limité ainsi qu'une complexité et des coûts de fabrication raisonnables.

Selon un mode de réalisation de l'invention, pour contrôler la position et la vitesse angulaire de rotation du miroir de balayage 30 ainsi que du dispositif optique de rotation d'image, le système optique 100 comporte en outre un codeur optique 80, solidaire en rotation de l'arbre de sortie du moyen d'entraînement en rotation 50.

La description ci-avant illustre clairement que, par ses différentes caractéristiques et leurs avantages, la présente invention atteint les objectifs qu'elle s'était fixés. En particulier, elle propose un système optique pour l'observation spatiale permettant d'assurer un balayage de la scène visée sans rotation de l'image dans le plan image, tout en présentant un encombrement moindre par rapport aux systèmes optiques existants, et en améliorant la synchronisation de la rotation du miroir de balayage et du dispositif optique de rotation d'image par l'utilisation d'un moyen d'entraînement en rotation commun audit miroir de balayage et audit dispositif optique de rotation d'image.

## Revendications

1. Système optique (100) comportant :
- un miroir de balayage (30), rotatif, agencé de sorte à recevoir un faisceau incident de rayons (11) et renvoyer un faisceau de rayons, dit faisceau d'entrée (12), selon un axe donné, dit premier axe (121),
- un instrument optique (20) agencé de sorte à recevoir le faisceau d'entrée (12) provenant du miroir de balayage (30), et à renvoyer un faisceau de rayons, dit faisceau de sortie (13), selon un axe donné, dit deuxième axe (131),
- un dispositif optique de rotation d'image (40), disposé sur le deuxième axe (131) et agencé de sorte à recevoir le faisceau de sortie (13),
**caractérisé en ce que** l'instrument optique (20) est agencé de sorte à renvoyer le faisceau de sortie (13) parallèlement au faisceau d'entrée (12), dans une direction opposée audit faisceau d'entrée, en direction du dispositif optique de rotation d'image (40), **en ce que** le miroir de balayage (30) est agencé de sorte à présenter un axe de rotation (300) aligné sur le premier axe (121), **en ce que** le dispositif optique de rotation d'image (40) est agencé de sorte à présenter un axe de rotation (400) aligné sur le deuxième axe (131), et **en ce que** le système optique (100) comporte un moyen d'entraînement en rotation (50) commun au miroir de balayage (30) et au dispositif optique de rotation d'image (40) autour de leur axe de rotation respectif (300; 400).

2. Système optique selon la revendication 1 comportant un moyen de couplage en rotation (60) du miroir de balayage (30) et du dispositif optique de rotation d'image (40), associé au moyen d'entraînement en rotation (50) commun.

3. - Système optique selon la revendication 2 dans lequel le moyen de couplage en rotation (60) présente un rapport de transmission entre une vitesse angulaire de rotation du miroir de balayage (30) et une vitesse angulaire rotation du dispositif optique de rotation d'image (40) de 2.

4. Système optique selon l'une des revendications 2 ou 3 comportant un dispositif de compensation de couple (70) couplé au moyen de couplage en rotation (60).

5. Système optique selon l'une des revendications 2 à 4 dans lequel le moyen de couplage en rotation (60) est un système à galets-courroie (61, 62, 63).

6. Système optique selon l'une des revendications 2 à 4 dans lequel le moyen de couplage (60) comporte un système à engrenages (61 b, 62b, 63b).

7. Système optique selon l'une des revendications précédentes dans lequel l'instrument optique (20) est un télescope comportant au moins trois miroirs (M1, M2, M3).

## Patentansprüche

1. Optisches System (100), umfassend:
- einen rotierenden Abtastspiegel (30), der derart angeordnet ist, um ein einfallendes Strahlenbündel (11) zu empfangen und ein Strahlenbündel, den Eingangsstrahl (12), entlang einer gegebenen Achse, der ersten Achse (121), zu reflektieren,
- ein optisches Instrument (20), das derart angeordnet ist, um den Eingangsstrahl (12), der von dem Abtastspiegel (30) stammt, zu empfangen und ein Strahlenbündel, den Ausgangsstrahl (13), entlang einer gegebenen Achse, der zweiten Achse (131), zu reflektieren,
- eine optische Vorrichtung zur Bilddrehung (40), die auf der zweiten Achse (131) angeordnet ist und derart ausgebildet ist, um den Ausgangsstrahl (13) zu empfangen,
**dadurch gekennzeichnet, dass** das optische Instrument (20) derart angeordnet ist, um den Ausgangsstrahl (13) parallel zu dem Eingangsstrahl (12) in einer zu dem Eingangsstrahl entgegengesetzten Richtung in Richtung der optischen Vorrichtung zur Bilddrehung (40) zu reflektieren, dass der Abtastspiegel (30) derart ausgebildet ist, um eine Drehachse (300) aufzuweisen, die mit der ersten Achse (121) ausgerichtet ist, dass die optische Vorrichtung zur Bilddrehung (40) derart ausgebildet ist, um eine Drehachse (400) aufzuweisen, die mit der zweiten Achse (131) ausgerichtet ist, und dass das optische System (100) ein Drehantriebsmittel (50) aufweist, das dem Abtastspiegel (30) und der optischen Vorrichtung zur Bilddrehung (40) um ihre jeweilige Drehachse (300; 400) gemeinsam ist.

2. Optisches System nach Anspruch 1, umfassend ein Drehkopplungsmittel (60) des Abtastspiegels (30) und der optischen Vorrichtung zur Bilddrehung (40), das mit dem gemeinsamen Drehantriebsmittel (50) verbunden ist.

3. Optisches System nach Anspruch 2, wobei das Drehkopplungsmittel (60) ein Übertragungsverhältnis zwischen einer Drehwinkelgeschwindigkeit des Abtastspiegels (30) und einer Drehwinkelgeschwindigkeit der optischen Vorrichtung zur Bilddrehung (40) von 2 aufweist.

4. Optisches System nach einem der Ansprüche 2 oder 3, umfassend eine Drehmomentausgleichsvorrichtung (70), die mit dem Drehkopplungsmittel (60) verbunden ist.

5. Optisches System nach einem der Ansprüche 2 bis 4, wobei das Drehkopplungsmittel (60) ein System mit Rollen und Riemen (61, 62, 63) ist.

6. Optisches System nach einem der Ansprüche 2 bis 4, wobei das Kopplungsmittel (60) ein Getriebesystem (61b, 62b, 63b) aufweist.

7. Optisches System nach einem der vorhergehenden Ansprüche, wobei das optische Instrument (20) ein Teleskop ist, das mindestens drei Spiegel (M1, M2, M3) aufweist.

## Claims

1. Optical system (100) comprising:
- a rotary scanning mirror (30), arranged in such a way as to receive an incident beam of rays (11) and return a beam of rays, called input beam (12), along a given axis, called first axis (121),
- an optical instrument (20) arranged in such a way as to receive the input beam (12) from the scanning mirror (30), and to return a beam of rays, called output beam (13), along a given axis, called second axis (131),
- an optical image rotation device (40), positioned on the second axis (131) and arranged in such a way as to receive the output beam (13),
**characterized in that** the optical instrument (20) is arranged in such a way as to return the output beam (13) parallel to the input beam (12), in a direction opposite to said input beam, towards the optical image rotation device (40), **in that** the scanning mirror (30) is arranged in such a way as to have an axis of rotation (300) aligned on the first axis (121), **in that** the optical image rotation device (40) is arranged in such a way as to have an axis of rotation (400) aligned on the second axis (131), and **in that** the optical system (100) comprises a rotational driving means (50) common to the scanning mirror (30) and to the optical image rotation device (40) about their respective rotation axes (300; 400).

2. Optical system according to Claim 1, comprising a means (60) for rotationally coupling the scanning mirror (30) and the optical image rotation device (40), associated with the common rotational driving means (50).

3. Optical system according to Claim 2, in which the rotational coupling means (60) exhibits a transmission ratio between an angular speed of rotation of the scanning mirror (30) and an angular speed of rotation of the optical image rotation device (40) of two.

4. Optical system according to either of Claims 2 and 3, comprising a torque compensation device (70) coupled to the rotational coupling means (60).

5. Optical system according to one of Claims 2 to 4, in which the rotational coupling means (60) is a rollers and belt system (61, 62, 63).

6. Optical system according to one of Claims 2 to 4, in which the coupling means (60) comprises a geared system (61b, 62b, 63b).

7. Optical system according to one of the preceding claims, in which the optical instrument (20) is a telescope comprising at least three mirrors (M1, M2, M3).
